# EUROPEAN PATENT SPECIFICATION

(11) **EP 4 194 839 B1**
(45) Date of publication and mention of the grant of the patent: **04.12.2024**
(21) Application number: 21948689.1
(22) Date of filing: 27.10.2021
(51) Int. Cl.: G01N 19/04, A24C 5/34

(54) **DEVICE FOR TESTING ADHESION RESISTANCE OF TIPPING PAPER FOR CIGARETTES AND USE METHOD THEREFOR**
VORRICHTUNG ZUM TESTEN DER HAFTFESTIGKEIT VON MUNDSTÜCKPAPIER FÜR ZIGARETTEN UND VERWENDUNGSVERFAHREN DAFÜR
DISPOSITIF DE TEST DE RÉSISTANCE D'ADHÉRENCE D'UN PAPIER D'EMBOUT DE CIGARETTES ET SON PROCÉDÉ D'UTILISATION

(30) Priority: 19.10.2021 CN 202111215967
(43) Date of publication of application: 14.06.2023
(73) Proprietor: China Tobacco Yunnan Industrial Co., Ltd, Kunming, Yunnan 650231 (CN)
(72) Inventor: ZHU, Ruizhi, Kunming, Yunnan 650231 (CN); LIU, Zhihua, Kunming, Yunnan 650231 (CN); WANG, Kai, Kunming, Yunnan 650231 (CN); XU, Yanqun, Kunming, Yunnan 650231 (CN); YANG, Ji, Kunming, Yunnan 650231 (CN); LIU, Chunbo, Kunming, Yunnan 650231 (CN); ZHANG, Fengmei, Kunming, Yunnan 650231 (CN); SI, Xiaoxi, Kunming, Yunnan 650231 (CN); JIANG, Wei, Kunming, Yunnan 650231 (CN); LI, Zhenjie, Kunming, Yunnan 650231 (CN); HE, Pei, Kunming, Yunnan 650231 (CN)
(74) Representative: Gille Hrabal Partnerschaftsgesellschaft mbB Patentanwälte
(86) International application number: PCT/CN2021/126541
(87) International publication number: WO 2023/065379

(56) References cited:
- CN-A- 103 364 337
- CN-A- 109 470 632
- CN-A- 110 320 094
- CN-A- 110 320 094
- CN-A- 110 646 333
- CN-A- 112 033 900
- CN-A- 112 198 094
- CN-U- 207 163 886
- JP-A- 2003 004 627
- JP-B2- 5 882 008

## Description

### TECHNICAL FIELD

The present invention belongs to the field of tobacco, and in particular, to the technical field of a device for cigarette tipping paper anti-adhesion test and its application method.

### BACKGROUND

During packaging, transportation, storage, etc., certain conditions such as high temperature, high humidity, extrusion, etc. may cause adhesion of surface coating of cigarette filter tipping paper, which may seriously affect the quality of cigarette products and the smoking experience. The reasons why there is no device that can qualitatively and quantitatively test adhesion of cigarette tipping paper in the prior art are that, on one hand, as contact between cigarette pillars in the packing box exists in line or/and surface, the contact area is small, the device in the prior art mainly qualitatively tests adhesion between the surface, as disclosed in FZ/T 01063-2008, anti-adhesion test of coated fabric is carried out on two plates pressing six samples, which is the contact between two surfaces, and it is unable to simulate adhesion of cigarette tipping paper in packing box; CN103364337A disclosed the determining the degree of adhesion of paint surfaces; JP5882008B2 disclosed evaluation method of surface protection member (uneven concavo-convex members) used for back surface grinding of semiconductor wafer and evaluation apparatus used for the method, but the surface protection member (uneven concavo-convex members) used in this application is different from the tangential contact between cigarette pillars in the packing box; CN110320094A disclosed a tipping paper high temperature test device which has extrusion die 6 with a structure 9 having chamfered edges, but the extrusion die with a chamfered edges structure used in this application is also different from the tangential contact between cigarette pillars in the packing box; on the other hand, cigarettes are sometimes in certain conditions such as high temperature and high humidity, however, the device in the prior art cannot be tested in such conditions. At present, there is no such device for cigarette tipping paper anti-adhesion test, thus, the device for cigarette tipping paper anti-adhesion test in simulated conditions is developed can screen anti-adhesion of cigarette tipping paper and avoid the influence of the use of cigarette tipping paper with adhesion risk on cigarette quality.

The present invention aims to solve the above-mentioned problems.

### SUMMARY

The present invention provides a device for cigarette tipping paper anti-adhesion test and a method for anti-adhesion test of cigarette tipping paper as defined by the appended claims.

The technical solutions of the present invention are as follows:
A first aspect of the present invention discloses a device for cigarette tipping paper anti-adhesion test, which includes the following components:
An upper cover 1, the inner side of the upper cover is a plurality of upper cover semi-cylinders 11 with the same radius arranged in parallel, and the upper cover semi-cylinder 11 is a cylinder with a cross section of a bow shape; the plurality of the upper cover semi-cylinders with the same radius is closely arranged;
A box 2, a plurality of holes 211 are arranged on the box upper surface 21 connected with the inner cavity of the box 2; the side wall of the box 2 has an opening 22; the hole 211 is a tiny hole, which can penetrate hot air or damp and hot air in the inner cavity of the box 2;
the box upper surface 21 has a plurality of box semi-cylinders 23 with the same radius **closely** arranged in parallel, and the box semi-cylinder 23 is a cylinder with a cross section of a bow shape;
the box semi-cylinder 23 is arranged in the same axial direction as the axial direction of the upper cover semi-cylinder 11;
the box semi-cylinder 23 has the same radius as the radius of the upper cover semi-cylinder 11
the box semi-cylinder 23 is arranged in the way that the cylinder surface of each box semi-cylinder 23 is tangent to the cylinder surface of each corresponding upper cover semi-cylinder 11, which can better simulate extrusion between cigarettes;
the opening 22 is externally connected to a hot air device to introduce hot air into the inner cavity of the box 2; or, the opening 22 is externally connected to a damp and hot air device to introduce damp and hot air into the inner cavity of the box 2.

A second aspect of the present invention discloses a method for anti-adhesion test of cigarette tipping paper by using the device, including the following steps:
Spread two pieces of cigarette tipping paper 3 with printing surface facing to each other on the box upper surface 21, cover the upper cover 1, place a weight on the upper surface of the upper cover and record the value of the weight; meanwhile, introduce hot air at a certain temperature into the box inner cavity 2 through the opening 22 and record the temperature; after a certain period of time, take down the two pieces of cigarette tipping paper 3, test adhesion force when separating the two pieces of cigarette tipping paper 3 to obtain anti-adhesion data of cigarette tipping paper.

Preferably, the following steps are included:
Spread two pieces of cigarette tipping paper 3 with printing surface facing to each other on the box upper surface 21, cover the upper cover 1, place a weight on the upper surface of the upper cover and record the value of the weight; meanwhile, introduce damp and hot air at a certain temperature into the box inner cavity 2 through the opening 22 and record the temperature and relative humidity of the damp and hot air; after a certain period of time, take down the two pieces of water-containing cigarette tipping paper 3, test adhesion force when separating the two pieces of water-containing cigarette tipping paper 3 to obtain anti-adhesion data of water-containing cigarette tipping paper;

Spread two pieces of cigarette tipping paper 3 with printing surface facing to each other on the box upper surface 21, cover the upper cover 1, place a weight on the upper surface of the upper cover and record the value of the weight; meanwhile, introduce damp and hot air at a certain temperature into the box inner cavity 2 through the opening 22 and record the temperature and relative humidity of the damp and hot air; after a certain period of time, stop introduction of damp and hot air, after the two pieces of water-containing cigarette tipping paper 3 are completely dry, test adhesion force when separating the two pieces of cigarette tipping paper 3 to obtain anti-adhesion data of the cigarette tipping paper after soaking and drying.

The present invention has the following beneficial effects:
1. The present invention designs for the first time a device for cigarette tipping paper anti-adhesion test. The device of the present invention is simple in design and is suitable for testing anti-adhesion of cigarette tipping paper in laboratory and production. The device of the present invention can qualitatively and quantitatively test adhesion of tipping paper.
2. Humidity, temperature and pressure of the device for cigarette tipping paper anti-adhesion test can be adjusted on site, which can simulate adhesion of tipping paper in various conditions, e.g., high temperature and high humidity, and test data is reliable and practical.

### BRIEF DESCRIPTION OF THE DRAWINGS

FIG.1 is the main view of the upper cover of the device for cigarette tipping paper anti-adhesion test of the present invention.
FIG.2 is a schematic view of the upper cover of the device for anti-adhesion test of cigarette tipping paper in the test state of the present invention.
FIG.3 is a schematic view of the box without the box semi-cylinder on the upper surface of the device for cigarette tipping paper anti-adhesion test of the present invention.
FIG.4 is a schematic view of a plurality of the box semi-cylinder with the same radius arranged closely on the box upper surface of the device for cigarette tipping paper anti-adhesion test of the present invention.

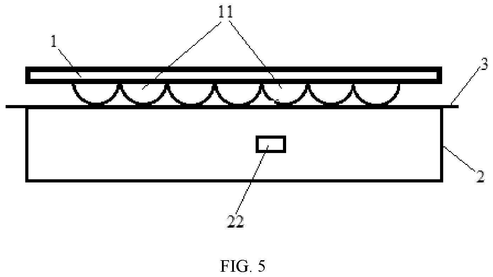

FIG.5 is a schematic view in anti-adhesion test state of cigarette tipping paper of embodiment 1 and embodiment 3 of the present invention.

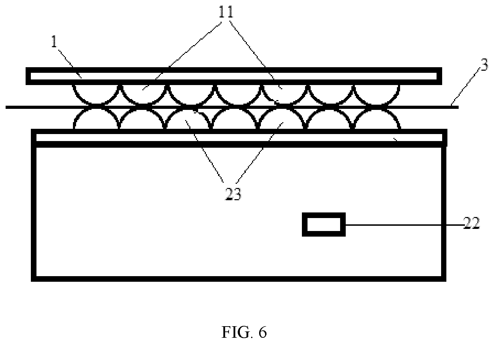

FIG.6 is a schematic view in anti-adhesion test state of cigarette tipping paper of embodiment 2 and embodiment 4 of the present invention.

List of signs in the drawings are as follows: 1. Upper cover, 11. Upper cover semi-cylinder, 2. Box, 21. Box upper surface, 211. Hole, 22. Opening, 23. Box semi-cylinder, 3. Cigarette tipping paper.

### DETAILED DESCRIPTION OF THE EMBODIMENTS

In order to make the purpose, technical solutions and beneficial effects of the present invention clearer, the following will be illustrated in detail in combination with the embodiments to facilitate the understanding of persons skilled in the art.

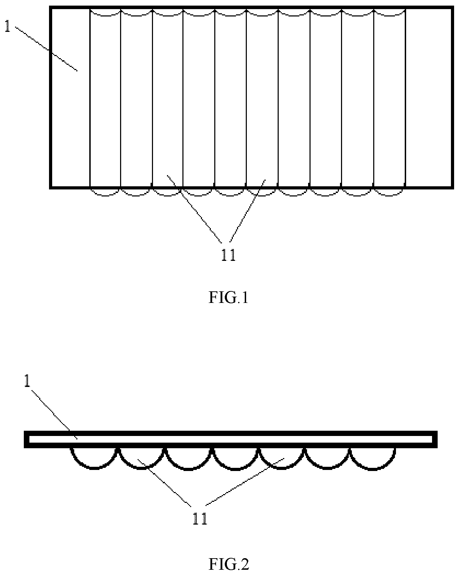

FIGS.1 and 2 are the schematic view of the upper cover 1 of a device for cigarette tipping paper anti-adhesion test, the inner surface of the upper cover is a plurality of upper cover semi-cylinders 11 with the same radius closely arranged in parallel, the upper cover semi-cylinder 11 is a cylinder with a cross section of a bow shape.

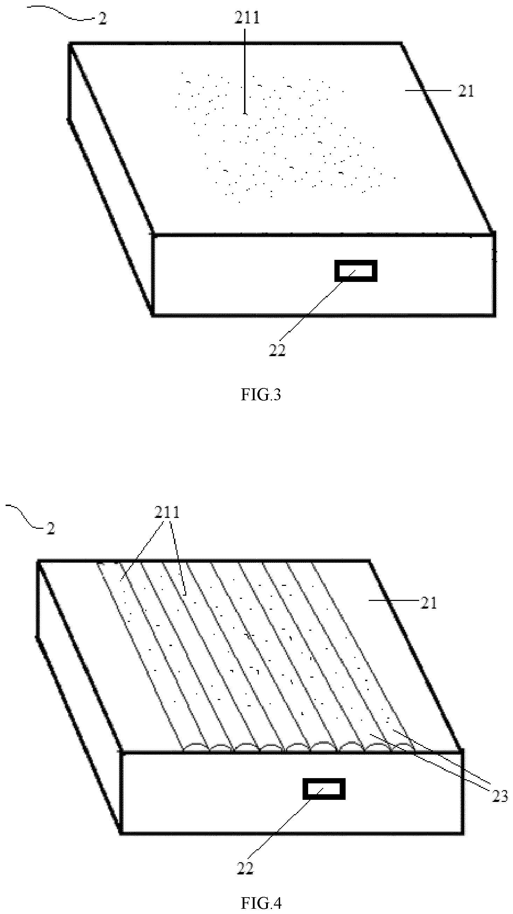

As is shown in FIG.3, a box 2, a plurality of holes 211 are arranged on the box upper surface 21 connected with the inner cavity of the box 2; the side wall of the box 2 has an opening 22; the opening 22 can be connected to an external hot air device, the opening 22 can also be connected to an external damp and hot air device; hot air or damp and hot air can be introduced into the inner cavity of the box through the opening 22, the hot air or damp and hot air can pass through the plurality of the holes 211 to the cigarette tipping paper to be tested; at this time, the box upper surface 21 is flat.

As is shown in FIG.4, preferably, the box upper surface 21 has a plurality of box semi-cylinders 23 with the same radius closely arranged in parallel; the box semi-cylinders 23 have the same radius as the upper cover semi-cylinder 11 and is arranged in the same axial direction; the box semi-cylinder 23 has the same radius as the upper cover semi-cylinder 11 as well as the cigarette, besides, the box semi-cylinders 23 are arranged in the way that the cylinder surface of each box semi-cylinder 23 is tangent to the cylinder surface of each corresponding upper cover semi-cylinder 11 in order to simulate extrusion between cigarettes.

A method for anti-adhesion test of cigarette tipping paper by using the device includes the following steps: spread two pieces of cigarette tipping paper 3 with printing surface facing to each other on the box upper surface 21, cover the upper cover 1, place a weight on the upper surface of the upper cover and record the value of the weight; preferably, introduce hot air at a certain temperature into the box inner cavity 2 through the opening 22 and record the temperature; after a certain period of time, take down the two pieces of cigarette tipping paper 3, test adhesion force when separating the two pieces of cigarette tipping paper 3 to obtain anti-adhesion data of cigarette tipping paper;

In case that the damp and hot air at a certain temperature is introduced, the test is divided into testing anti-adhesion data of two pieces of water-containing cigarette tipping paper, as well as anti-adhesion data of two pieces of cigarette tipping paper after soaking and drying; damp and hot air at a certain temperature is introduced into the inner cavity of the box 2 through the opening 22, as damp and hot air soak two pieces of cigarette tipping paper through a plurality of tiny holes 211 on the box upper surface 21, at this time, two pieces of water-containing cigarette tipping paper anti-adhesion data and two pieces of cigarette tipping paper anti-adhesion data after soaking and drying need to be tested, only in this way, the actual conditions of cigarette products during packaging, transportation and storage can be better simulated.

### Embodiment 1:

The embodiment illustrates the case that the box upper surface 21 is flat as shown in FIG.3, the test is carried out at room temperature without introduction of hot air or damp and hot air; wherein, the weight mass is 2kg, after placing cigarette tipping paper for 1h, adhesion force of two pieces of cigarette tipping paper is measured as 0.000 N, and there is no adhesion on the printing surface.

### Embodiment 2:

The embodiment illustrates the case that the box upper surface 21 shown in FIG.4 is closely arranged with a plurality of box semi-cylinders 23 with the same radius in parallel; the box semi-cylinders 23 and the upper cover semi-cylinder 11 have the same radius and are arranged in the same axial direction; the radius of the box semi-cylinders 23 and the upper cover semi-cylinder 11 is the same as that of the cigarette, besides, the box semi-cylinder 23 is arranged in the way that the cylinder surface of each box semi-cylinder 23 is tangent to the cylinder surface of each corresponding upper cover semi-cylinder 11. Test at room temperature without introduction of hot air or damp and hot air; wherein, the weight mass is 2kg, after placing cigarette tipping paper for 1h, adhesion force of two pieces of cigarette tipping paper is measured as 0.000 N, and there is no adhesion on the printing surface.

### Embodiment 3

Same as embodiment 1, introduce the hot air of 120°C into the inner cavity of box 2 through the opening 22; wherein, the weight mass is 1kg, after placing cigarette tipping paper for 0.5h, adhesion force of two pieces of cigarette tipping paper is measured as 0.654N, and there is adhesion on the printing surface, the printing color coating is obviously damaged during separation.

### Embodiment 4

Same as embodiment 2, introduce the damp and hot air with the temperature of 50°C and relative humidity of 80% into the inner cavity of box 2 through the opening 22; wherein, the weight mass is 1kg, after placing cigarette tipping paper for 2h, adhesion force of two pieces of cigarette tipping paper is measured as 0.206N, and there is adhesion on the printing surface, part of printing color coating is slightly damaged during separation.

### Embodiment 5

Same as embodiment 4, introduce the damp and hot air with the temperature of 50°C and relative humidity of 80% into the inner cavity of box 2 through the opening 22; wherein, the weight mass is 1kg, after placing cigarette tipping paper for 2h, stop introduction of damp and hot air, under the condition that the weight mass is 1kg, after placing cigarette tipping paper at room temperature for 24 hours until two pieces of water-containing cigarette tipping paper are completely dry, the maximum adhesion force of the two pieces of completely dry cigarette tipping paper is measured as 2.895N, the printing surface is seriously adhered, and one piece of the cigarette tipping paper is torn and broken during separation.

The above has shown and described basic principles, main features and advantages of the present invention. It should be understood by those skilled in the art that, the present invention is not limited by the above-mentioned embodiment, what is described in the above-mentioned embodiment and the description is only to illustrate the principle of the present invention, without departing from the scope of the present invention, the present invention may have various changes and improvements, which all fall within the scope of what is claimed. The claimed scope of the present invention is defined by the appended claims.

## Claims

1. A device for cigarette tipping paper anti-adhesion test, the device comprises the following components:
An upper cover (1),
A box (2), a plurality of holes (211) are arranged on the box upper surface (21) connected with the inner cavity of the box (2); the side wall of the box (2) has an opening (22);
and the opening is externally connected to a hot air device; or the opening is externally connected to a damp and hot air device;
**characterized in that**:
the inner side of the upper cover is a plurality of upper cover semi-cylinders with the same radius closely arranged in parallel, i.e. contacting each other, and the upper cover semi-cylinder is a cylinder with a cross section of a bow shape;
the box upper surface (21) has a plurality of box semi-cylinders (23) with the same radius closely arranged in parallel, i.e. contacting each other, and the box semi-cylinder (23) is a cylinder with a cross section of a bow shape;
the box semi-cylinder (23) is arranged in the same axial direction as the axial direction of the upper cover semi-cylinder (11);
the box semi-cylinder (23) has the same radius as the radius of the upper cover semi-cylinder (11);
the box semi-cylinder (23) is arranged in the way that the cylinder surface of each box semi-cylinder (23) is tangent to the cylinder surface of each corresponding upper cover semi-cylinder (11).

2. A method for anti-adhesion test of cigarette tipping paper by using the device according to claim 1, comprising the following steps: Spread two pieces of cigarette tipping paper (3) with printing surface facing to each other on the box upper surface (21), cover the upper cover (1), place a weight on the upper surface of the upper cover and record the value of the weight; meanwhile, introduce hot air at a certain temperature into the box inner cavity (2) through the opening (22) and record the temperature; after a certain period of time, take down the two pieces of cigarette tipping paper (3), test adhesion force when separating the two pieces of cigarette tipping paper (3) to obtain anti-adhesion data of cigarette tipping paper.

3. The method according to claim 2, comprising the following steps:
Spread two pieces of cigarette tipping paper (3) with printing surface facing to each other on the box upper surface (21), cover the upper cover (1), place a weight on the upper surface of the upper cover and record the value of the weight; meanwhile, introduce damp and hot air at a certain temperature and record the temperature and relative humidity of the damp and hot air; after a certain period of time, take down the two pieces of water-containing cigarette tipping paper (3), test adhesion force when separating the two pieces of water-containing cigarette tipping paper (3) to obtain anti-adhesion data of water-containing cigarette tipping paper;
Spread two pieces of cigarette tipping paper (3) with printing surface facing to each other on the box upper surface (21), cover the upper cover (1), place a weight on the upper surface of the upper cover and record the value of the weight; meanwhile, introduce damp and hot air at a certain temperature and record the temperature and relative humidity of the damp and hot air; after a certain period of time, stop introduction of damp and hot air, after the two pieces of water-containing cigarette tipping paper (3) are completely dry, test adhesion force when separating the two pieces of cigarette tipping paper (3) to obtain anti-adhesion data of the cigarette tipping paper after soaking and drying.

## Patentansprüche

1. Eine Vorrichtung für einen Antihafttest von Zigaretten-Mundstückpapier, die Vorrichtung umfasst die folgenden Komponenten:
eine obere Abdeckung (1),
einen Kasten (2), eine Vielzahl von Löchern (211) sind auf der Kastenoberseite (21) angeordnet, die mit dem inneren Hohlraum des Kastens (2) verbunden sind; die Seitenwand des Kastens (2) weist eine Öffnung (22) auf;
und die Öffnung ist äußerlich mit einer Heißluftvorrichtung verbunden; oder die Öffnung ist äußerlich mit einer Feucht- und Heißluftvorrichtung verbunden;
**dadurch gekennzeichnet, dass**:
die Innenseite der oberen Abdeckung eine Vielzahl von oberen Abdeckungshalbzylindern mit demselben Radius ist, die eng parallel angeordnet sind, d. h. einander berühren, und der obere Abdeckungshalbzylinder ein Zylinder mit einem bogenförmigen Querschnitt ist;
die Kastenoberseite (21) eine Vielzahl von Kasten-Halbzylindern (23) mit demselben Radius aufweist, die eng parallel angeordnet sind, d. h. einander berühren, und der Kasten-Halbzylinder (23) ein Zylinder mit einem bogenförmigen Querschnitt ist;
der Kasten-Halbzylinder (23) in derselben axialen Richtung wie die axiale Richtung des oberen Abdeckungshalbzylinders (11) angeordnet ist;
der Kasten-Halbzylinder (23) denselben Radius hat wie der Radius des oberen Abdeckungshalbzylinders (11);
der Kasten-Halbzylinder (23) so angeordnet ist, dass die Zylinderfläche jedes Kasten-Halbzylinders (23) tangential zur Zylinderfläche jedes entsprechenden oberen Abdeckungshalbzylinders (11) ist.

2. Ein Verfahren für einen Antihafttest von Zigaretten-Mundstückpapier durch Verwendung der Vorrichtung gemäß Anspruch 1, umfassend die folgenden Schritte:
Breite zwei Stücke Zigaretten-Mundstückpapier (3) mit einander zugewandter Druckfläche auf der Kastenoberseite (21) aus, decke die obere Abdeckung (1) ab, platziere ein Gewicht auf der oberen Oberfläche der oberen Abdeckung und zeichne den Gewichtswert auf; in der Zwischenzeit leite heiße Luft mit einer bestimmten Temperatur durch die Öffnung (22) in den inneren Hohlraum des Kastens (2) ein und zeichne die Temperatur auf; nach einer bestimmten Zeit nimm die zwei Stücke Zigaretten-Mundstückpapiers (3) ab und teste Adhäsionskraft beim Trennen der zwei Stücke Zigaretten-Mundstückpapiers (3), um Antihaftdaten von Zigaretten-Mundstückpapier zu erhalten.

3. Das Verfahren gemäß Anspruch 2, umfassend die folgenden Schritte:
breite zwei Stücke Zigaretten-Mundstückpapier (3) mit einander zugewandter Druckfläche auf der Kastenoberseite (21), decke die obere Abdeckung (1) ab, platziere ein Gewicht auf der oberen Oberfläche der oberen Abdeckung und zeichne den Gewichtswert auf; in der Zwischenzeit leite feuchte und heiße Luft bei einer bestimmten Temperatur ein und zeichne die Temperatur und die relative Feuchtigkeit der feuchten und heißen Luft auf; nach einer bestimmten Zeit nimm die zwei Stücke wasserhaltigen Zigaretten-Mundstückpapiers (3) ab, teste Adhäsionskraft beim Trennen der zwei Stücke wasserhaltigen Zigarettenmundstückpapiers (3), um Antihaftdaten von wasserhaltigem Zigarettenmundstückpapier zu erhalten;
breite zwei Stücke Zigaretten-Mundstückpapier (3) mit einander zugewandter Druckfläche auf der Kastenoberseite (21), decke die obere Abdeckung (1) ab, platziere ein Gewicht auf der oberen Oberfläche der oberen Abdeckung und zeichne den Gewichtswert auf; in der Zwischenzeit leite feuchte und heiße Luft bei einer bestimmten Temperatur ein und zeichne die Temperatur und die relative Feuchtigkeit der feuchten und heißen Luft auf; nach einer bestimmten Zeit stoppe die Zufuhr von feuchter und heißer Luft, nachdem die beiden Stücke von wasserhaltigem Zigaretten-Mundstückpapier (3) vollständig trocken sind, teste Adhäsionskraft beim Trennen der zwei Stücke Zigaretten-Mundstückpapiers (3), um die Antihaftdaten des Zigaretten-Mundstückpapiers nach dem Einweichen und Trocknen zu erhalten.

## Revendications

1. Un dispositif pour le test d'anti-adhérence du papier à bascule de cigarettes, le dispositif comprend les composants suivants :
un couvercle supérieur (1),
une boîte (2), une pluralité de trous (211) sont disposés sur la surface supérieure de boîte (21) reliés à la cavité intérieure de la boîte (2) ; la paroi latérale de la boîte (2) présente une ouverture (22) ;
et l'ouverture est reliée extérieurement à un dispositif d'air chaud ; ou l'ouverture est reliée extérieurement à un dispositif d'air humide et d'air chaud ;
**caractérisé en ce que** :
la face intérieure du couvercle supérieur est une pluralité de demi-cylindres de couvercle supérieur de même rayon étroitement disposés en parallèle, c'est-à-dire en contact les uns avec les autres, et le demi-cylindre de couvercle supérieur est un cylindre avec une section transversale d'une forme d'arc ;
la surface supérieure de boîte (21) a une pluralité de demi-cylindres de boîte (23) de même rayon étroitement disposés en parallèle, c'est-à-dire en contact les uns avec les autres, et le demi-cylindre de boîte (23) est un cylindre avec une section transversale d'une forme d'arc ;
le demi-cylindre de boîte (23) est disposé dans la même direction axiale que la direction axiale du demi-cylindre de couvercle supérieur (11) ;
le demi-cylindre de boîte (23) a le même rayon que le rayon du demi-cylindre de couvercle supérieur (11) ;
le demi-cylindre de boîte (23) est disposé de telle sorte que la surface de cylindre de chaque demi-cylindre de boîte (23) soit tangente à la surface de cylindre de chaque demi-cylindre de couvercle supérieur (11) correspondant.

2. Procédé d'essai d'anti-adhérence du papier à bascule de cigarettes en utilisant le dispositif selon la revendication 1, comprenant les étapes suivantes :
étaler deux morceaux de papier à bascule de cigarettes (3) avec la surface d'impression face à face sur la surface supérieure de boîte (21), couvrir le couvercle supérieur (1), placer un poids sur la surface supérieure du couvercle supérieur et enregistrer la valeur du poids ; entre-temps, introduire de l'air chaud à une certaine température dans la cavité intérieure de boîte (2) par l'ouverture (22) et enregistrer la température ; après une certaine période de temps, démonter les deux morceaux de papier à bascule de cigarettes (3), tester la force d'adhérence lors de la séparation des deux morceaux de papier à bascule de cigarettes (3) afin d'obtenir des données d'anti-adhérence du papier à bascule de cigarettes.

3. Le procédé selon la revendication 2, comprenant les étapes suivantes :
étaler deux morceaux de papier à bascule de cigarettes (3) avec la surface d'impression face à face sur la surface supérieure de boîte (21), couvrir le couvercle supérieur (1), placer un poids sur la surface supérieure du couvercle supérieur et enregistrer la valeur du poids ; entre-temps, introduire de l'air humide et de l'air chaud à une certaine température et enregistrer la température et l'humidité relative de l'air humide et de l'air chaud ; après une certaine période de temps, démonter les deux morceaux de papier à bascule de cigarettes contenant de l'eau (3), tester la force d'adhérence lors de la séparation des deux morceaux de papier à bascule de cigarettes contenant de l'eau (3) afin d'obtenir des données d'anti-adhérence du papier à bascule de cigarettes contenant de l'eau ;
étaler deux morceaux de papier à bascule de cigarettes (3) avec la surface d'impression face à face sur la surface supérieure de boîte (21), couvrir le couvercle supérieur (1), placer un poids sur la surface supérieure du couvercle supérieur et enregistrer la valeur du poids ; entre-temps, introduire de l'air humide et de l'air chaud à une certaine température et enregistrer la température et l'humidité relative de l'air humide et de l'air chaud ; après une certaine période de temps, arrêter l'introduction de l'air humide et de l'air chaud, après que les deux morceaux de papier à bascule de cigarettes contenant de l'eau (3) soient complètement secs, tester la force d'adhérence lors de la séparation des deux morceaux de papier à bascule de cigarettes (3) afin d'obtenir des données d'anti-adhérence du papier à bascule de cigarettes après le trempage et le séchage.
